# EUROPÄISCHE PATENTSCHRIFT

(11) **EP 3 315 243 B1**
(45) Veröffentlichungstag und Bekanntmachung des Hinweises auf die Patenterteilung: **15.09.2021**
(21) Anmeldenummer: 17182330.5
(22) Anmeldetag: 20.07.2017
(51) Int. Cl.: B23K 26/06, B23K 26/14, B23K 26/38, B23K 101/18, B23K 26/02

(54) **VERFAHREN ZUM LASERSCHNEIDEN MIT OPTIMIERTER GASDYNAMIK**
METHOD FOR LASER CUTTING WITH OPTIMIZED GAS DYNAMICS
PROCÉDÉ DE DÉCOUPE AU LASER AYANT UNE DYNAMIQUE GAZEUSE OPTIMISÉE

(30) Priorität: 11.08.2016 DE 102016215019
(43) Veröffentlichungstag der Anmeldung: 02.05.2018
(73) Patentinhaber: TRUMPF Werkzeugmaschinen GmbH + Co. KG, 71254 Ditzingen (DE)
(72) Erfinder: Bea, Martin, 70806 Kornwestheim (DE); Kaiser, Tobias, 71277 Rutesheim (DE); Rominger, Volker, 71711 Steinheim an der Murr (DE)
(74) Vertreter: Kohler Schmid Möbus Patentanwälte

(56) Entgegenhaltungen:
- WO-A1-2010/049032
- WO-A1-2015/170029
- DE-A1-102014 206 358
- US-A1- 2012 012 570

## Beschreibung

Die Erfindung betrifft ein Verfahren zum Schneiden von plattenförmigen metallischen Werkstücken mit einer Dicke von mindestens 2mm gemäß dem Oberbegriff des Anspruchs 1 (siehe z.B. WO 2015/170029 A1).

Ein derartiges Verfahren ist auch beispielsweise durch die US 2012 / 0 012 570 A1 bekannt geworden.

Im Stand der Technik werden beim Laserschneiden zur Vermeidung eines hohen Schneidgasverbrauchs üblicherweise Schneidgasdüsen mit einem möglichst kleinen Düsendurchmesser eingesetzt. Um mit solchen Düsen in guter Qualität schneiden zu können, muss beim Schneiden mit Stickstoff als Schneidgas ein Gasdruck im Bereich von 10 bar bis 25 bar (N₂-Hochdruck-Schmelzschneidprozess) verwendet werden. Beim Schneiden mit Sauerstoff als Schneidgas kann der Gasdruck kleiner als 10 bar sein, wie die US 2012 / 0 012 570 A1 zeigt. Eine ineffiziente Einkopplung des Schneidgases kann zu einer Verringerung der Schneidgeschwindigkeit bzw. zu Gratbildung im Allgemeinen und insbesondere beim Schneiden spitzer Ecken führen. Die Abstimmung der Schneidparameter auf die im Schneidprozess vorhandenen Gasströmungsbedingungen ist hierbei eine zwingende Voraussetzung für gute Schneidergebnisse und stabile Produktionsbedingungen.

Aus der JP2003048090A ist weiterhin bekannt, beim Schmelzschneiden von Werkstücken mit einer Dicke über 8mm den Druck des Schneidgases zu reduzieren, um beim Schneiden mit CO₂-Laserstrahlung die Erzeugung von Stickstoffplasma im Schnittspalt zu vermeiden. Dazu wird eine Schneidgasdüse mit speziell geformter Innenkontur vorgeschlagen, die am Düsenmund einen Bereich mit vergrößertem Durchmesser aufweist. Die werkstückseitige Düsenaustrittsöffnung hat einen Durchmesser von 4mm, und der Druck des Schneidgases liegt in einem Bereich von 7,8 bar bis 13,7 bar.

Der vorliegenden Erfindung stellt sich die Aufgabe, ein Verfahren zum Laserschneiden plattenförmiger metallischer Werkstücke anzugeben, durch das bei hoher Schneidgeschwindigkeit eine gute Qualität der Schnittkante erreicht wird.

Ein Verfahren zum Laserschneiden von plattenförmigen metallischen Werkstücken gemäß der Erfindung ist im Anspruch 1 definiert.

Durch die Verringerung der Strömungsgeschwindigkeit werden Anzahl und Intensität von Druckstößen im Schneidgasstrahl innerhalb des Schnittspalts vermindert. Eine Ablösung der Schneidgasströmung von der Schneidfrontoberfläche tritt aufgrund der großen Überdeckung des Schnittspalts durch die Düsenöffnung - wenn überhaupt - erst nach einer möglichst hohen Eindringstrecke in den Schnittspalt hinein auf. Diese Effekte ermöglichen eine höhere Schneidgeschwindigkeit bei gleichzeitig hoher Qualität der Schnittkanten bzw. -ecken sowie eine Steigerung der maximal schneidbaren Werkstückdicke.

Erfindungsgemäß wurde erkannt, dass die Form der Düseninnenkontur nur einen geringen Einfluss auf die Schneidqualität beim Schneiden dicker Werkstücke ausübt und dass der Einfluss des Schneidgasdrucks entscheidend ist. Die Düsenform kann divergent oder konvergent sein, oder die Schneidgasdüse kann als Nebenstromdüse oder Langlochdüse ausgebildet sein. Ein hoher Schneidgasdruck führt in Verbindung mit kleinen Düsendurchmessern beim Schneiden von Werkstücken mit einer Dicke von mehr als 2mm zu einer inhomogenen Gasströmung im Schnittspalt. Der nach der Düsenöffnung stark expandierende Gasstrahl weist entlang seiner Ausbreitungsrichtung eine stark inhomogene Dichte- und Geschwindigkeitsverteilung auf. Dadurch sind auch die auf die Schneidfront und die Schmelze wirkenden Scherkräfte im Werkstück in Strahlausbreitungsrichtung stark unterschiedlich. Zudem löst sich die Gasströmung bereits in einer geringen Tiefe im Schnittspalt (nahe der Werkstückoberfläche) von der Schneidfrontoberfläche ab, was einen Verlust der die Schmelze austreibenden Scherkräfte im unteren Bereich des Schnittspaltes bedeutet und eine Schnittkante mit geringer Qualität durch eine ausgeprägte Gratbildung zur Folge hat.

Je größer die Werkstückdicke und je höher die Gasgeschwindigkeit beim Eintritt in den Schnittspalt ist, umso stärker verwirbelt der Gasstrahl im Schnittspalt und umso unwahrscheinlicher wird es, dass dieser turbulente Gasstrahl einen homogen aus dem Schnittspalt austretenden Schmelzfaden erzeugt, welcher sich rückstandsfrei (d.h. gratfrei) von der Werkstückunterseite ablöst. Je größer die Tiefe eines Schnittspaltes und je höher die Eintrittsgeschwindigkeit einer Gasströmung in einen Schnittspalt ist, umso stärker wird die Gasströmung zudem in diesem Schnittspalt abgebremst.

Wird der zum Schmelzaustrieb erforderliche Gasvolumenstrom durch eine Schneidgasdüse mit kleiner Düsenöffnung auf den Schnittspalt gerichtet, muss das Schneidgas notwendigerweise mit hoher Geschwindigkeit aus der Düsenöffnung ausströmen und erfährt hierdurch eine sehr hohe Bremswirkung in Nutzrichtung (d.h. parallel zum Laserstrahl) im Schnittspalt. Quer zur anfänglichen Ausbreitungsrichtung (d.h. entgegen der Schneidrichtung in den bereits erzeugten Schnittspalt hinein) ist die Bremswirkung auf den Gasstrahl jedoch geringer, weil seine Anfangsgeschwindigkeit in dieser Richtung nach Austritt aus der Düsenöffnung ebenfalls geringer ist. Der "scharfe" Hochdruckgasstahl, welcher aus einer kleinen Düsenöffnung austritt und welcher eine eng begrenzte laterale Ausdehnung und eine hohe Eintrittsgeschwindigkeit in den Schnittspalt aufweist, ändert also nach kurzer Eindringtiefe in den Schnittspalt aufgrund der hohen Bremswirkung entlang der Strahlachse zunehmend seine Richtung und fließt entsprechend der geringeren Bremswirkung quer zur Strahlachse zunehmend horizontal in den bereits erzeugten Schnittspalt hinein ab. Hierdurch steht der Gasstrahl schon nach kurzer Eindringtiefe nicht mehr für die Beschleunigung des Schmelzfilms (d.h. zum Schmelzaustrieb) zur Verfügung, und das Schneidergebnis wird schlechter, weil ein Grat entsteht.

Wird derselbe, für einen gegebenen Schmelztransport erforderliche Gasvolumenstrom pro Zeiteinheit jedoch durch eine Schneidgasdüse mit sehr viel größerer Düsenöffnung hindurch auf den Schnittspalt gelenkt, ist hierfür ein wesentlich geringerer Schneidgasdruck erforderlich. Hierdurch weist dieser "weiche" Schneidgasstrahl eine deutlich geringere Eintrittsgeschwindigkeit in den Schnittspalt hinein auf, erfährt hierdurch eine wesentlich geringere Bremswirkung in Nutzrichtung (d.h. parallel zur Laserstrahlachse) und ändert als Resultat während des Durchtritts durch den Schnittspalt weder seine Geschwindigkeit noch seine Richtung in wesentlicher Weise. Dieser weiche Schneidgasstrahl mit breiter lateraler Ausdehnung und geringer Eintrittsgeschwindigkeit in den Schnittspalt steht also über die komplette Werkstückdicke hinweg zur Beschleunigung und zum Austrieb des Schmelzfilms zur Verfügung und ermöglicht hierdurch gratfreie Schnitte.

Durch das erfindungsgemäße Verfahren kann die Prozessgeschwindigkeit beispielsweise beim Schmelzschnitt (Schneidgas Stickstoff) gegenüber herkömmlichen Laserschneidprozessen um bis zu 50 % gesteigert werden. Zudem werden durch die große Überdeckung des Schnittspalts durch die Düsenöffnung die Gratbildung und Oxidationen bei scharfen Richtungswechseln verringert: Die "weiche" großflächigere Gasströmung aus Düsen mit großen Durchmessern ist besser dazu geeignet, auch weiter hinten im Schnittspalt erzeugte Schmelze noch sicher nach unten aus dem Schnittspalt auszutreiben und hierdurch bei Kurvenfahrten mit geringerem Vorschub eine Gratbildung zu vermeiden. Zusätzlich können dickere Werkstücke gratfrei geschnitten werden als dies mit den aus dem Stand der Technik bekannten Düse-Gasdruck-Kombinationen der Fall ist. Des Weiteren können Prozesse mit limitiertem Gasdruck, wie z. B. das Druckluftschneiden (typischerweise durchgeführt mit einem Gasdruck < 6 bar) oder das Schneiden mit durch Stickstoff-Generatoren vor Ort erzeugtem Stickstoff, auch bei Werkstückdicken eingesetzt werden, die bisher nicht gratfrei geschnitten werden konnten.

Außerdem übt der weiche Schneidgasstrahl eine geringere Saugwirkung auf die den Prozessort umgebende Atmosphäre aus, wodurch beispielsweise beim Schneiden mit Stickstoff weniger Fremdluft in den Schnittspalt eingebracht wird. Dadurch findet weniger Oxidation der Schnittkanten statt und/oder es kann Stickstoff mit geringerer Reinheit verwendet werden.

Erfindungsgemäß ist vor allem die Überdeckung des Schnittspalts durch die Düsenöffnung entscheidend, nicht allein die minimale Querschnittsfläche der Düsenöffnung. Als vorteilhaft haben sich bei dünneren Werkstücken (z.B. 5mm Werkstückdicke) Überdeckungen von mindestens 3 mm und bei dickeren Werkstücken (z.B. 15mm Werkstückdicke) Überdeckungen von mindestens 4mm erwiesen. Ziel ist es, dieses Verhältnis maximal zu halten; gasdynamisch ist immer, insbesondere bei Eckenfahrten, eine größtmögliche Schneidgasüberdeckung des Schnittspalts anzustreben. Einschränkungen ergeben sich lediglich aus ökonomischer und Flexibilitäts-Sicht: Größere Düsenöffnungen bedeuten einen erhöhten Gasverbrauch und ein erhöhtes Kollisionsrisiko mit benachbarten, bereits geschnittenen Werkstückteilen. Daher werden die Düsenöffnungen bei dünneren Werkstücken kleiner gewählt. Bevorzugt ist bei Werkstücken mit einer Dicke von größer als 10 mm die Strahlachse des Laserstrahls mindestens 4mm von dem hinteren Öffnungswandabschnitt der Düsenöffnung beabstandet.

Vorzugsweise sind die werkstückseitige Öffnungsfläche der Düsenöffnung, der Abstand der Düsenstirnfläche von der Werkstückoberfläche und der Schneidgasdruck so gewählt, dass die maximale Gasströmungsgeschwindigkeit beim Eintritt in den Schnittspalt die einfache Schallgeschwindigkeit nicht übersteigt.

Vorzugsweise entspricht der werkstückseitige Öffnungsdurchmesser der Düsenöffnung (bei kreisförmigen Düsenöffnungen) bzw. die Länge der Düsenöffnung in der langen Achse (bei ovalen oder rechteckigen Düsenöffnungen, Langlochdüsen) dem 10-fachen bis 30-fachen der Schnittspaltbreite. So wird der Düsendurchmesser bzw. die Größe der Düsenöffnung an die Werkstückdicke angepasst, da die Schnittspaltbreite mit zunehmender Werkstückdicke steigt. Dies wirkt einem durch eine zu große Düsenöffnung verursachten Anstieg des Schneidgasverbrauchs entgegen. Besonders bevorzugt beträgt der werkstückseitige Öffnungsdurchmesser der Düsenöffnung bzw. die Länge der Düsenöffnung in der langen Achse mindestens 7mm. Beim Schneiden von Werkstücken mit einer Dicke von mehr als 2mm liegt gemäß der Erfindung der Düsendurchmesser typischerweise zwischen 7mm und 12mm und der Schneidgasdruck zwischen 1 bar und 6 bar.

Durch den gleichzeitigen Einsatz von Schneidgasdüsen mit großen Öffnungsdurchmessern (zumindest in der langen Achse) von mehr als 7mm und geringer Schneidgasdrücke von unter 10 bar können mehrere positive Effekte auf die Schneidgasströmung vereint werden: Der geringe Gasdruck führt zu einer verminderten Expansion des Schneidgases an der Düsenöffnung und damit zu einer geringeren Ausbildung von Druckstößen. Eine große Düsenöffnung führt zu einer größeren Überdeckung des Schnittspalts durch die Düsenöffnung, wodurch der Schneidgasstrahl im Schnittspalt weniger stark auffächert und somit der Ablösepunkt des Schneidgases von der Schneidfrontoberfläche signifikant nach unten verlagert werden kann. Zusätzlich sinkt die Gasdichte im Schnittspalt, was bei hohen Laserleistungen und beim Einsatz eines CO₂-Lasers als Strahlquelle die Wahrscheinlichkeit der Entstehung eines sich negativ auf Schnittqualität und Schneidgeschwindigkeit auswirkenden Stickstoffplasmas verringert.

Um einem durch die große Düsenöffnung verursachten Anstieg des Schneidgasverbrauchs zusätzlich entgegenzuwirken, sollte der Abstand zwischen der Düsenöffnung und der Werkstückoberfläche möglichst gering sein. Idealerweise ist mit Hilfe einer aufgesetzten Düse ein Nullspalt einzustellen, da in diesem Fall der Gasverbrauch maximal reduziert werden kann und die Gasströmung ideal in den Schnittspalt eingekoppelt wird. Daher beträgt der Abstand der Düsenstirnfläche zur Werkstückoberfläche gemäß der Erfindung zwischen 0mm und 0,5mm.

Der maximale Wirkungsgrad bei der Umwandlung von Laserleistung in Schmelzleistung (d.h. maximale Einkoppeleffizienz) wird erreicht, wenn das Verhältnis zwischen der Werkstückdicke und der Schnittspaltbreite bzw. dem Fokusdurchmesser einem Wert von 5 entspricht. Der Fokusdurchmesser sollte daher idealerweise 1/5 der Werkstückdicke betragen und nicht geringer als 1/10 bis 1/30 der Werkstückdicke sein. Auf diese Weise kann der in Vorschubrichtung weisende Teil des Schnittspaltes (die Schneidfront) optimal durch den Laserstrahl aufgeschmolzen werden. Gleichzeitig kann das Schneidgas einfacher in den Schnittspalt eindringen. Der Bereich der für Hochleistungslaser beim Laserschneiden sinnvoll anzuwendenden Fokusdurchmesser erstreckt sich von 100µm bis 2000µm und beträgt bevorzugt mindestens 150µm, besonders bevorzugt mindestens 200µm.

Für die Stabilität und Effizienz des Laserschneidprozesses ist es weiterhin von Vorteil, wenn der Fokus des Laserstrahls in Höhe der Werkstückoberfläche bzw. auf der Werkstückoberfläche angeordnet ist und (insbesondere beim Schmelzschneiden) die Schnittspaltbreite über die gesamte Blechdicke hinweg dem Fokusdurchmesser entspricht. Der Verlauf des Durchmessers des fokussierten Strahls (Strahlkaustik) sollte also über die gesamte Werkstückdicke hinweg möglichst wenig variieren. Das Strahlparameterprodukt und der Fokusdurchmesser des fokussierten Laserstrahls sollten daher so an die Werkstückdicke angepasst sein, dass die resultierende Rayleigh-Länge der 0,5-fachen bis einfachen Werkstückdicke entspricht. Die resultierende Schnittspaltbreite entspricht dann dem 1-fachen bis 1,4-fachen Wert des gewählten Fokusdurchmessers.

Das erfindungsgemäße Verfahren ist grundsätzlich für alle Laserleistungen umsetzbar und bewährt sich vor allem bei größeren Werkstückdicken, d.h. bei Laserleistungen von ≥ 3000 W. Es hat sich als vorteilhaft für Schmelzschneidprozesse mit Stickstoff als Schneidgas erwiesen. Als Laserquelle kann ein Festkörper- oder ein Diodenlaser zum Einsatz kommen. Insbesondere mit einem Diodenlaser als Strahlquelle (wie z.B. in WO 2016/046954 A1 beschrieben) lässt sich das erfindungsgemäße Verfahren vorteilhaft einsetzen, da aufgrund der gegenüber einem Festkörperlaser geringeren Strahlqualität des Diodenlasers die Schnittspaltbreite zunimmt und daher eine große Überdeckung des Schnittspalts durch die werkstückseitige Öffnung der Düse eine besonders vorteilhafte Wirkung auf den Prozess ausübt.

Besonders bevorzugt wird als Laserstrahlquelle ein Diodenlaser eingesetzt, der einen Mehrfachwellenlängen-Laserstrahl erzeugt.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen Längsschnitt durch eine beim erfindungsgemäßen Laserschneiden über ein plattenförmiges Werkstück hinweg bewegte Schneidgasdüse;
- Fign. 2a, 2b: eine Ansicht von unten auf das plattenförmige Werkstück und auf die Schneidgasdüse von Fig. 1, wobei die in Fig. 2a gezeigte Schneidgasdüse einen runden Düsenöffnungsquerschnitt und die in Fig. 2b gezeigte Schneidgasdüse einen ovalen Düsenöffnungsquerschnitt aufweist; und
- Fig. 3: eine Laserschneidmaschine zum Durchführen des erfindungsgemäßen Verfahrens zum Laserschneiden von plattenförmigen Werkstücken.

In der folgenden Beschreibung der Zeichnung werden für gleiche bzw. funktionsgleiche Bauteile identische Bezugszeichen verwendet.

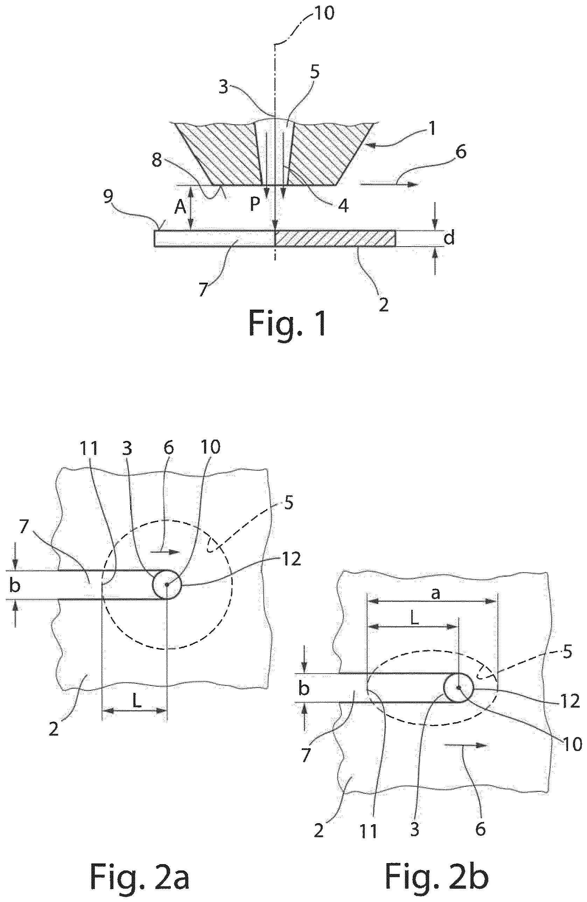

Die in **Fig. 1** gezeigte Schneidgasdüse **1** dient zum Laserschneiden von plattenförmigen metallischen Werkstücken **2** mit einer Dicke **d** von mindestens 2 mm mittels eines Laserstrahls **3** und eines Schneidgases **4,** die beide gemeinsam aus einer Düsenöffnung **5** der Schneidgasdüse 1 austreten. Bei dem Laserschneidverfahren handelt es sich um einen Schmelzschneidprozess, bei dem als Schneidgas 4 Stickstoff eingesetzt wird.

Die Schneidgasdüse 1 wird über das Werkstück 2 in Schneidrichtung **6** bewegt, um im Werkstück 2 einen Schnittspalt **7** zu erzeugen, wobei der Abstand **A der** werkstückseitigen Düsenstirnfläche **8** zur Werkstückoberfläche **9** erfindungsgemäß zwischen 0mm und 0,5mm beträgt. Das aus der Düsenöffnung 5 austretende Schneidgas 4 weist einen Schneidgasdruck **p** von höchstens 10 bar auf. Die Strahlachse des Laserstrahls 3 ist mit **10** bezeichnet. Vorteilhaft ist der Fokus des Laserstrahls 3 in Höhe der Werkstückoberfläche 9 bzw. auf der Werkstückoberfläche 9 angeordnet und beträgt der Fokusdurchmesser des Laserstrahls 3 mindestens 1/5 der Werkstückdicke d. Das Strahlparameterprodukt und der Fokusdurchmesser des Laserstrahls 3 sind idealerweise so gewählt, dass die resultierende Rayleigh-Länge der 0,5-fachen bis einfachen Werkstückdicke d entspricht. Die mündungsseitige Öffnungsfläche der Düsenöffnung 5, der Abstand A der Düsenstirnfläche 8 von der Werkstückoberfläche 9 und der Schneidgasdruck p sind idealerweise so gewählt, dass die maximale Gasströmungsgeschwindigkeit beim Eintritt in den Schnittspalt 7 die einfache Schallgeschwindigkeit nicht übersteigt.

**Fig. 2a** zeigt die Ansicht von unten auf eine Schneidgasdüse 1 mit rundem Öffnungsquerschnitt und **Fig. 2b** die Ansicht von unten auf eine Langloch-Schneidgasdüse 1 mit ovalem Öffnungsquerschnitt. Alternativ kann der Öffnungsquerschnitt der Langloch-Schneidgasdüse auch rechteckig sein. Auf Höhe der werkstückseitigen Düsenstirnfläche ist die Strahlachse **10** des Laserstrahls 3 mindestens 3mm von dem in Schneidrichtung 6 hinteren Öffnungswandabschnitt **11** der Düsenöffnung 5 beabstandet. Gesehen in Richtung der Strahlachse 10 wird also der von der Schneidfront **12** ausgehende Schnittspalt 7 von der Düsenöffnung 5 der Schneidgasdüse 1 auf einer Länge **L** von mindestens 3 mm überdeckt bzw. überlappt. Im Fall des in Fig. 2a gezeigten runden Öffnungsquerschnitts entspricht der Öffnungsdurchmesser der Düsenöffnung 5 bevorzugt dem 10-fachen bis 30-fachen der Schnittspaltbreite **b** und beträgt mindestens 7mm. Im Fall der in Fig. 2b gezeigten Langloch-Schneidgasdüse 1 mit ovalem Öffnungsquerschnitt entspricht die Länge **a** der in Schneidrichtung 6 verlaufenden langen Achse der Düsenöffnung 5 bevorzugt dem 10-fachen bis 30-fachen der Schnittspaltbreite **b** und beträgt mindestens 7mm.

Der Schneidgasdruck unter 10 bar bewirkt eine geringe Expansion des aus der Düsenöffnung 5 austretenden Schneidgases 4. Durch die dadurch verringerte Strömungsgeschwindigkeit werden Anzahl und Intensität von Druckstößen im Schnittspalt 7 verringert. Eine Ablösung der Schneidgasströmung von der Schneidfrontoberfläche 12 tritt aufgrund der großen Überdeckung des Schnittspalts 7 durch die Düsenöffnung 5 - wenn überhaupt - erst nach einer möglichst hohen Eindringstrecke in den Schnittspalt 7 hinein auf. Diese Effekte ermöglichen eine höhere Schneidgeschwindigkeit bei gleichzeitig hoher Qualität der Schnittkanten bzw. -ecken sowie eine Steigerung der maximal schneidbaren Werkstückdicke d. Durch die große Überdeckung des Schnittspalts 7 durch die Düsenöffnung 5 werden die Gratbildung und Oxidationen bei scharfen Richtungswechseln verringert. Die "weiche" großflächige Gasströmung aus dem großen Öffnungsdurchmesser der Schneidgasdüse 1 ermöglicht es, auch weiter hinten im Schnittspalt 7 erzeugte Schmelze noch sicher nach unten aus dem Schnittspalt 7 auszutreiben und hierdurch bei Kurvenfahrten mit geringerem Vorschub eine Gratbildung zu vermeiden.

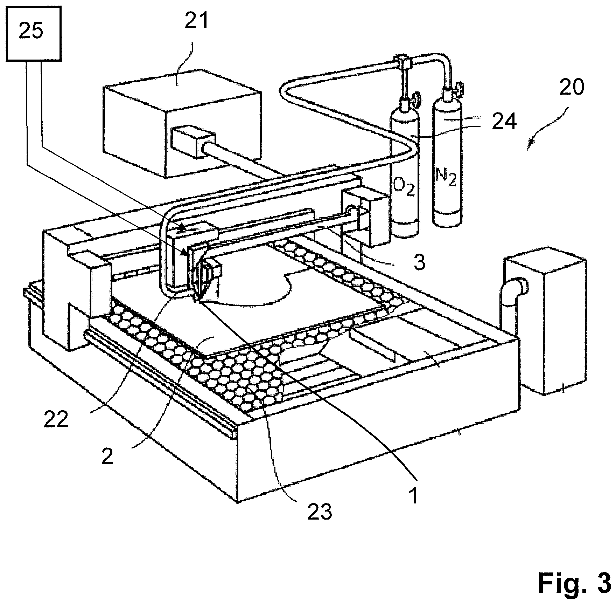

**Fig. 3** zeigt eine zum Durchführen des beschriebenen Laserschneidverfahrens geeignete Laserschneidmaschine **20.**

Die Laserschneidmaschine 20 weist beispielsweise einen Festkörperlaser und bevorzugt einen Diodenlaser als Laserstrahlerzeuger **21,** einen verfahrbaren Laserschneidkopf **22** und eine Werkstückauflage **23** auf, auf der das Werkstück 2 angeordnet ist. Im Laserstrahlerzeuger 21 wird der Laserstrahl 3 erzeugt, der mittels eines (nicht gezeigten) Lichtleitkabels oder (nicht gezeigten) Umlenkspiegeln vom Laserstrahlerzeuger 21 zum Laserschneidkopf 22 geführt wird. Der Laserstrahl 3 wird mittels einer im Laserschneidkopf 22 angeordneten Fokussieroptik auf das Werkstück 2 gerichtet. Die Laserschneidmaschine 1 wird darüber hinaus mit Schneidgasen **24,** d.h. Stickstoff, versorgt. Das Schneidgas 24 wird der Schneidgasdüse 1 des Laserschneidkopfes 22 zugeführt, aus der es zusammen mit dem Laserstrahl 3 austritt. Die Laserschneidmaschine 20 umfasst ferner eine Maschinensteuerung **25,** die programmiert ist, den Laserschneidkopf 22 samt seiner Schneidgasdüse 1 entsprechend einer Schneidkontur relativ zum Werkstück 2 zu verfahren.

## Patentansprüche

1. Verfahren zum Schneiden von plattenförmigen metallischen Werkstücken (2) mit einer Dicke (d) von mindestens 2mm in einem Schmelzschneidprozess mittels eines Laserstrahls (3) eines Festkörper- oder Diodenlasers und mit Stickstoff als Schneidgas (4), die beide gemeinsam aus einer Düsenöffnung (5) einer Schneidgasdüse (1) austreten, wobei das aus der Düsenöffnung (5) austretende Schneidgas (4) einen Schneidgasdruck (p) aufweist, **dadurch gekennzeichnet,**
**dass** der werkstückseitige Öffnungsdurchmesser oder die Länge (a) der langen Achse der Düsenöffnung (5) zwischen 7 mm und 12 mm beträgt,
**dass** der Abstand (A) der werkstückseitigen Düsenstirnfläche (8) zur Werkstückoberfläche (9) 0mm bis zu 0,5mm beträgt,
**dass** der Schneidgasdruck (p) zwischen 1 bar und 6 bar beträgt, und
**dass** auf Höhe der werkstückseitigen Düsenstirnfläche (8) die Strahlachse (10) des Laserstrahls (3) mindestens 3mm von dem in Schneidrichtung (6) hinteren Öffnungswandabschnitt (11) der Düsenöffnung (5) beabstandet ist.

2. Verfahren nach Anspruch 1, **dadurch gekennzeichnet, dass** bei Werkstücken (2) mit einer Dicke (d) von größer als 10mm die Strahlachse (10) des Laserstrahls (3) mindestens 4mm von dem hinteren Öffnungswandabschnitt (11) der Düsenöffnung (5) beabstandet ist.

3. Verfahren nach Anspruch 1 oder 2, **dadurch gekennzeichnet, dass** die werkstückseitige Öffnungsfläche der Düsenöffnung (5), der Abstand (A) der Düsenstirnfläche (8) von der Werkstückoberfläche (9) und der Schneidgasdruck (p) so gewählt sind, dass die maximale Gasströmungsgeschwindigkeit beim Eintritt in den Schnittspalt (7) die einfache Schallgeschwindigkeit nicht übersteigt.

4. Verfahren nach einem der vorhergehenden Ansprüche, **dadurch gekennzeichnet, dass** der werkstückseitige Öffnungsdurchmesser oder die Länge (a) der langen Achse der Düsenöffnung (5) dem 10-fachen bis 30-fachen der Schnittspaltbreite (b) entspricht.

5. Verfahren nach einem der vorhergehenden Ansprüche, **dadurch gekennzeichnet, dass** der Fokusdurchmesser des Laserstrahls (3) mindestens 1/30, bevorzugt mindestens 1/10 und besonders bevorzugt mindestens 1/5, der Werkstückdicke (d), beträgt.

6. Verfahren nach einem der vorhergehenden Ansprüche, **dadurch gekennzeichnet, dass** der Fokusdurchmesser des Laserstrahls (3) mindestens 150µm, insbesondere mindestens 200µm, beträgt.

7. Verfahren nach einem der vorhergehenden Ansprüche, **dadurch gekennzeichnet, dass** der Fokus des Laserstrahls (3) in Höhe der Werkstückoberfläche (9) angeordnet ist.

8. Verfahren nach einem der vorhergehenden Ansprüche, **dadurch gekennzeichnet, dass** das Strahlparameterprodukt und der Fokusdurchmesser des Laserstrahls (3) so gewählt sind, dass die resultierende Rayleigh-Länge der 0,5-fachen bis einfachen Werkstückdicke (d) entspricht.

9. Verfahren nach einem der vorhergehenden Ansprüche, **dadurch gekennzeichnet, dass** der Wertebereich des Fokusdurchmessers des Laserstrahls (3) sich von 100 µm bis 2000 µm erstreckt.

## Claims

1. Method for cutting plate-shaped metal workpieces (2) having a thickness (d) of at least 2 mm in a fusion cutting process by means of a laser beam (3) of a solid-state laser or diode laser and with nitrogen as cutting gas (4), which both together exit through a nozzle opening (5) of a cutting gas nozzle (1), wherein the cutting gas (4) that exits through the nozzle opening (5) has a cutting gas pressure (p),
**characterized in that**
the opening diameter on the workpiece side or the length (a) of the long axis of the nozzle opening (5) is between 7mm and 12mm,
the distance (A) of the nozzle end face (8) on the workpiece side from the workpiece surface (9) is between 0mm and 0.5mm,
the cutting gas pressure (p) is between 1 bar and 6 bar, and
at the height of the nozzle end face (8) on the workpiece side, the beam axis (10) of the laser beam (3) is at a distance of at least 3 mm from the rear opening wall portion (11) of the nozzle opening (5) viewed in the cutting direction (6).

2. Method according to claim 1, **characterized in that**, for workpieces (2) having a thickness (d) of greater than 10 mm, the beam axis (10) of the laser beam (3) is at a distance of at least 4 mm from the rear opening wall portion (11) of the nozzle opening (5).

3. Method according to claim 1 or 2, **characterized in that** the opening area of the nozzle opening (5) on the workpiece side, the distance (A) of the nozzle end face (8) from the workpiece surface (9) and the cutting gas pressure (p) are chosen such that the maximum speed of the gas flow when it enters the cutting gap (7) does not exceed the simple speed of sound.

4. Method according to one of the preceding claims, **characterized in that** the opening diameter on the workpiece side or the length (a) of the long axis of the nozzle opening (5) corresponds to 10 times to 30 times the cutting gap width (b).

5. Method according to one of the preceding claims, **characterized in that** the focus diameter of the laser beam (3) is at least 1/30, preferably at least 1/10 and particularly preferably at least 1/5 of the workpiece thickness (d).

6. Method according to one of the preceding claims, **characterized in that** the focus diameter of the laser beam (3) is at least 150 µm, in particular at least 200 µm.

7. Method according to one of the preceding claims, **characterized in that** the focus of the laser beam (3) is arranged at the height of the workpiece surface (9).

8. Method according to one of the preceding claims, **characterized in that** the beam parameter product and the focus diameter of the laser beam (3) are chosen such that the resultant Rayleigh length corresponds to 0.5 times to once the workpiece thickness (d).

9. Method according to one of the preceding claims, **characterized in that** the value range of the focus diameter of the laser beam (3) is between 100µm and 2000µm.

## Revendications

1. Procédé de découpe de pièces à usiner (2) métalliques en forme de plaques d'une épaisseur (d) d'au moins 2 mm au cours d'un processus de découpe par fusion, au moyen d'un faisceau laser (3) d'un laser à solide ou d'un laser à diode et d'un azote faisant office de gaz de coupe (4), émanant tous les deux conjointement d'un orifice de buse (5) d'une buse de gaz de coupe (1), le gaz de coupe (4) qui émane de l'orifice de buse (5) se trouvant sous une pression de gaz de coupe (p),
**caractérisé en ce que**
le diamètre d'orifice du côté de la pièce à usiner ou la longueur (a) de l'axe long de l'orifice de buse (5) est compris (e) entre 7 mm et 12 mm, **en ce que** l'écart (A) entre la face frontale de la buse (8) du côté de la pièce à usiner et la surface de la pièce à usiner (9) est compris entre 0 mm et 0,5 mm,
**en ce que** la pression du gaz de coupe (p) est comprise entre 1 bar et 6 bar, et **en ce qu'**à la hauteur de la face frontale de la buse (8) du côté de la pièce à usiner, l'axe de faisceau (10) du faisceau laser (3) est écarté d'au moins 3 mm du segment arrière dans la direction de coupe (6) de la paroi d'orifice (11) de l'orifice de buse (5) .

2. Procédé selon la revendication 1, **caractérisé en ce que** sur des pièces à usiner (2) d'une épaisseur (d) supérieure à 10 mm, l'axe de faisceau (10) du faisceau laser (3) est écarté d'au moins 4 mm du segment arrière de la paroi d'orifice (11) de l'orifice de buse (5).

3. Procédé selon la revendication 1 ou 2, **caractérisé en ce que** la surface d'orifice du côté de la pièce à usiner de l'orifice de buse (5), l'écart (A) entre la face frontale de la buse (8) et la surface de la pièce à usiner (9) et la pression du gaz de coupe (p) sont sélectionnés de telle sorte que la vitesse maximale de circulation du gaz à l'entrée dans le trait de coupe (7) ne dépasse pas la simple vitesse du son.

4. Procédé selon l'une quelconque des revendications précédentes, **caractérisé en ce que** le diamètre d'orifice du côté de la pièce à usiner ou la longueur (a) de l'axe long de l'orifice de buse (5) correspond à de 10 fois à 30 fois la largeur du trait de coupe (b).

5. Procédé selon l'une quelconque des revendications précédentes, **caractérisé en ce que** le diamètre au point focal du faisceau laser (3) s'élève à au moins 1/30, de préférence à au moins 1/10 et de manière particulièrement préférentielle à au moins 1/5 de l'épaisseur de la pièce à usiner (d).

6. Procédé selon l'une quelconque des revendications précédentes, **caractérisé en ce que** le diamètre au point focal du faisceau laser (3) s'élève à au moins 150 µm, notamment à au moins 200 µm.

7. Procédé selon l'une quelconque des revendications précédentes, **caractérisé en ce que** le point focal du faisceau laser (3) est placé à hauteur de la surface de la pièce à usiner (9).

8. Procédé selon l'une quelconque des revendications précédentes, **caractérisé en ce que** le produit du paramètre de projection et le diamètre du foyer du faisceau laser (3) sont sélectionnés de telle sorte que la longueur de Rayleigh résultante corresponde à de 0,5 fois jusqu'à 1 fois l'épaisseur de la pièce à usiner (d).

9. Procédé selon l'une quelconque des revendications précédentes, **caractérisé en ce que** l'ordre de valeurs du diamètre au point focal du faisceau laser (3) s'étend de 100 µm à 2000 µm.
